(19)

Europäisches
Patentamt
European
Patent Office
Office européen
des brevets

(11) **EP 4 354 527 A1**

(12) **EUROPEAN PATENT APPLICATION**
published in accordance with Art. 153(4) EPC

(43) Date of publication:
**17.04.2024 Bulletin 2024/16**

(21) Application number: **22921030.7**

(22) Date of filing: **18.01.2022**

(51) International Patent Classification (IPC):
*H01M 4/04* (2006.01)

(52) Cooperative Patent Classification (CPC):
**H01M 4/623; H01M 4/04; H01M 4/0435;
H01M 4/13; H01M 4/131; H01M 4/1391;
H01M 4/505; H01M 4/525; H01M 4/5825;
H01M 4/625; H01M 4/66;** H01M 2004/021;
Y02E 60/10

(86) International application number:
**PCT/CN2022/072475**

(87) International publication number:
**WO 2023/137580 (27.07.2023 Gazette 2023/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **LU, Lei
  Ningde, Fujian 352100 (CN)**
• **WANG, Zheng
  Ningde, Fujian 352100 (CN)**
• **LI, Shisong
  Ningde, Fujian 352100 (CN)**

(74) Representative: **Rowlands, Stuart Michael
Maucher Jenkins
Seventh Floor Offices
Artillery House
11-19 Artillery Row
London SW1P 1RT (GB)**

(54) **ELECTRODE PLATE AND PREPARATION METHOD THEREFOR**

(57)    This application relates to an electrode plate and a preparation method thereof. The electrode plate includes a current collector and an electrode active material layer disposed on at least one surface of the current collector, where the electrode active material layer has a maximum porosity on an outer surface side thereof. The electrode plate in this application has the maximum porosity on the outer surface side of the electrode active material layer, which can significantly increase an infiltration rate of electrolyte to the electrode plate.

FIG. 8

**Description**

**TECHNICAL FIELD**

This application relates to the field of battery technologies, and specifically, to an electrode plate and a preparation method thereof.

**BACKGROUND**

In recent years, with increasing demand for clean energy, secondary batteries have been widely used in energy storage power supply systems such as hydroelectric power plants, thermal power plants, wind power plants, and solar power plants, and many other fields including electric tools, transportation means, military equipment, and aerospace. As the applications of secondary batteries have greatly expanded, higher requirements have been put forward for the performance of the secondary batteries.

Preparation of electrode plate of a secondary battery is an important process that affects the performance of the battery. A microstructure of the electrode plate (for example, surface porosity and binder distribution) directly affects an electrolyte infiltration effect, thereby affecting important performance such as battery internal resistance, battery rate performance, and battery life. Currently, in a preparation process of electrode plate of a secondary battery, the following wet coating process is usually used: preparing active material slurry → coating → drying → rolling. During drying of the electrode plate (especially near a transition point (where an upper layer of the electrode plate has been dried but a lower layer has not dried yet)), solvent in an upper layer of the active material layer first volatilizes, and solvent in a lower layer rapidly rises. In this case, because of the following reasons, the solvent carries binder in the rising process, resulting in binder floating upward: (1) action of surface tension; (2) action of concentration gradient; (3) capillary action; (4) thermodynamical motion of solid particles; (5) density difference between particles (density difference between the upper and lower layers due to particle sedimentation). In addition, as the coating speed increases, the drying temperature needs to be further increased, and the surface tension of the solvent further decreases. As a result, a tension difference between the upper dry electrode active material layer and the solvent surface further increases, resulting in easier upward migration and spreading of the solvent and easier upward floating of the binder. Therefore, the final electrode plate presents a state of enriched binder on the surface and less binder on the lower layer. In addition, although the rising of the binder can be mitigated by decreasing the drying temperature, this leads to a decrease in the production rate of the secondary battery.

During drying of the electrode plate, the binder floats upward, causing accumulation of the binder on the surface layer of the electrode plate. After cold pressing, the surface layer of the electrode plate is easily densified. On the one hand, a densified surface of the electrode plate makes the electrolyte infiltration difficult, which seriously affects the production rate of the secondary battery. On the other hand, a low porosity of the surface of the electrode plate leads to a difficulty in active ions to travel between electrode plates and a decrease in the rate performance and the low-temperature performance. In addition, under the condition that the electrode plate is difficult to infiltrate, the area with insufficient infiltration cannot realize electrochemical reaction, resulting in abnormal battery performance and risk of precipitation of active material metal (for example, lithium precipitation) on the interface. Therefore, a microstructure of the electrode plate directly affects the electrolyte infiltration effect, and further affects important performance such as the battery internal resistance, the battery rate performance, and the battery life.

To solve the foregoing problem, in the prior art (for example, CN111293273B), the following technical solutions have been proposed: pre-coating a first substrate (aluminum or copper foil) with an interface binder (acrylate type), applying an electrode active material layer on the interface binder, and after drying and rolling, preparing a first pre-treated electrode plate; coating a second substrate (aluminum or copper foil) with a transfer binder (polyurethane, polystyrene, or polyacrylate), covering the resulting coating on a surface of the first pre-treated electrode plate to form a second pre-treated electrode plate, where the transfer binder and the interface binder have opposite bonding performance to (at room temperature, the interface binder has bonding performance and the transfer binder has no bonding power, and after lighting or heating, the interface binder loses activity and the transfer binder has bonding performance) to achieve transfer; after heating (100°C-200°C) or lighting, transferring the entire electrode plate active material layer from a surface of the first substrate to that of the second substrate, so that the reversal of porosity of the electrode plate in a gradient direction is achieved, meaning that the electrode plate active material layer is densified in the center and loose on the surface.

## SUMMARY

### Technical problems

The inventors of this application found through intensive study that the foregoing technical solutions have at least the following problems.

As compared with an existing manufacturing process of an electrode plate of a secondary battery, the foregoing technology requires an additional interface binder and transfer binder and an additional heating or lighting process, in particular, the heating or lighting process is complex, resulting in an increase in costs, and bringing difficulties to batch production.

The coated active material slurry and the interface binder interpenetrate each other. This leads to the following risks: (1) because of penetration, the surface of the electrode active material layer may crack easily after drying, resulting in poor consistency and low product yield of the electrode plate. Under the condition that the surface of the electrode plate cracks, during cycling of the battery, problems such as metal precipitation of the active material (for example, lithium precipitation) are prone to occur at the interface (negative electrode) of the electrode plate; and (2) the preceding penetration causes insufficient transferring of the electrode active material layer during cycling of the battery, meaning that there is residual electrode active material in the interface binder layer, resulting in a loss of the electrode active material and a decrease in battery energy density.

After transferring, the substrate and interface binder cannot be reused, resulting in an increase in material costs. The transferring process requires lighting or heating, resulting in an increase in energy consumption. In addition, the lighting or heating process needs to be performed for a specific period of time to invalidate the interface binder. Therefore, this method is less productive.

Transfer binders are mostly esters. Ester binders are generally low in bonding, and swell significantly in electrolyte (especially at a high temperature (50°C-60°C)). Therefore, the electrode plate is prone to coming off (especially at the later stage of cycling of the battery). In addition, due to swelling, ester binders are easily migrated to the electrolyte, resulting in a side reaction and deteriorating battery performance.

### Technical solutions

The inventors of this application propose this application to resolve the foregoing problems.

A first aspect of this application provides an electrode plate, including a current collector and an electrode active material layer disposed on at least one surface of the current collector, where

the electrode active material layer has a maximum porosity on an outer surface side thereof.

In some embodiments, the electrode active material layer may have a minimum porosity on a bottom surface side thereof that is opposite the outer surface side.

In some embodiments, when the electrode plate is a positive electrode plate, a compacted density may be 2.1 $g/cm^3$-3.8 $g/cm^3$; and when the electrode plate is a negative electrode plate, the compacted density may be 1.3 $g/cm^3$-1.8 $g/cm^3$.

A second aspect of this application provides a preparation method of electrode plate, including the following steps:

> step (1): providing an electrode active material slurry, applying the electrode active material slurry on at least one surface of a polymer substrate, and performing drying to obtain an initial electrode plate that has an electrode active material layer; and
>
> step (2): providing a metal substrate, stacking the metal substrate and the initial electrode plate in such a way that a surface of the metal substrate faces the electrode active material layer, and performing a compressing process to transfer the electrode active material layer to the surface of the metal substrate.

In some embodiments, a pressure of the compressing process may be 20 tons-80 tons.

In some embodiments, the compressing process may be rolling.

In some embodiments, the polymer substrate may be selected from at least one of polyethylene terephthalate (PET) film, polypropylene (PP) film, polyethylene (PE) film, polyvinyl alcohol (PVA) film, polyvinylidene fluoride (PVDF) film, polytetrafluoroethylene (PTFE) film, polycarbonate (PC) film, polyvinyl chloride (PVC) film, polymethyl methacrylate (PMMA) film, polyimide (PI) film, polystyrene (PS) film, and polybenzimidazole (PBI) film.

In some embodiments, a thickness of the polymer substrate may be 25 μm-500 μm.

In some embodiments, the metal substrate may be an aluminum foil or a copper foil.

A third aspect of this application provides a secondary battery, where the secondary battery includes the electrode plate according to any one of the foregoing embodiments.

A fourth aspect of this application provides a battery module, including the secondary battery provided in the third aspect of this application.

A fifth aspect of this application provides a battery pack, including the battery module provided in the fourth aspect of this application.

A sixth aspect of this application provides an electric apparatus including at least one of the secondary battery according to the third aspect of this application, the battery module according to the fourth aspect of this application, or the battery pack according to the fifth aspect of this application.

Beneficial effects

This application provides an electrode plate and a preparation method thereof. The electrode plate prepared by using the preparation method of electrode plate in this application has the maximum porosity on the outer surface side of the electrode active material layer, which can significantly increase an infiltration rate of electrolyte at the electrode plate. From the aspect of battery productivity, the infiltration rate of the electrolyte to the electrode plate is improved, which can shorten the time for electrolyte infiltrating the cell and greatly improve the battery productivity. From the aspect of battery performance, the infiltration of the electrolyte to the electrode plate is improved, which can improve the interface characteristics of the battery and increase electrochemical reaction activity of the electrode plate. In addition, the electrode plate has a high porosity on an outer surface side thereof, which facilitates active ions to travel between the electrode plates, thereby improving kinetic performance and high- and low-temperature performance of the battery.

In addition, in the preparation method of electrode plate in this application, neither additional interface binder or transfer binder nor heating or lighting process is required. Therefore, the preceding electrode plate can be easily produced in a low cost and on a large scale (the electrode slurry can be manufactured by using currently mature materials and formula systems, with no need to coordinate with a new material, with no need to adjust the formula, or even with no need to perform special treatment on a current collector, and therefore, control is simple, and mass production is easier to implement). In addition, as compared with the prior art, in the preparation method of electrode plate in this application, because no interpenetration between the coated active material slurry and the interface binder is required, the electrode plate prepared has both excellent consistency and product rate, the electrode plate is not prone to metal precipitation (for example, lithium precipitation) of the active material during cycling of the battery, and the electrode plate does not have a problem of a decrease in energy density of the battery caused by losses of residual electrode active material in the interface binder layer. In addition, there is no need to use a transfer binder (for example, an ester-based binder). Therefore, the electrode plate of this application is not prone to the risk of coming off under a high temperature (50°C-60°C) condition (especially at a later stage of cycling of the battery), and there will be no side reactions and deterioration of battery performance due to the migration of ester binder into the electrolyte.

In addition, this application provides a secondary battery, a battery module, a battery pack, and an electric apparatus that include the electrode plate. The secondary battery, the battery module, the battery pack, and the electric apparatus also have advantages of the foregoing electrode plate.

**BRIEF DESCRIPTION OF DRAWINGS**

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a secondary battery as a power source in an embodiment of this application.
FIG. 7 is a schematic diagram of a manufacturing device of electrode plate according to an embodiment of this application.
FIG. 8 is a schematic diagram of a transferring process of an electrode active material layer according to an embodiment of this application.
FIG. 9 is an SEM diagram of an outer surface side of a positive electrode plate in Comparative Example 1.
FIG. 10 is an SEM diagram of an outer surface side of a positive electrode plate in Example 1.
FIG. 11 is an SEM diagram of an outer surface side of a positive electrode plate in Comparative Example 2.
FIG. 12 is an SEM diagram of an outer surface side of a positive electrode plate in Example 4.

Description of reference signs:

1. battery pack; 2. upper box body; 3. lower box body; 4. battery module; 5. secondary battery; 51. housing; 52. electrode assembly; 53. top cover assembly; 6. cold pressing roller; 7. metal substrate unwinding apparatus; 8. initial electrode plate unwinding apparatus; 9. polymer substrate winding apparatus; 10. electrode plate winding apparatus; 11. metal substrate; 12. initial electrode plate; 101. polymer substrate; and 102. electrode active material layer.

## DESCRIPTION OF EMBODIMENTS

The following describes an electrode plate in this application in detail. However, unnecessary detailed descriptions may be omitted. For example, detailed descriptions of a well-known matter or overlapping descriptions of an actually identical structures have been omitted. This is to avoid unnecessarily prolonging the following descriptions, for ease of understanding by persons skilled in the art. In addition, the following descriptions and embodiments are provided for persons skilled in the art to fully understand this application and are not intended to limit the subject matter recorded in the claims.

Unless otherwise specified, all the embodiments and optional embodiments of this application can be combined with each other to form new technical solutions.

Unless otherwise specified, all the technical features and optional technical features of this application can be combined with each other to form new technical solutions.

The following describes in detail the electrode plate of this application and a secondary battery, a battery module, a battery pack, and an electrical apparatus that include the electrode plate.

A first embodiment of this application provides an electrode plate, including a current collector and an electrode active material layer disposed on at least one surface of the current collector, where

the electrode active material layer has a maximum porosity on an outer surface side thereof.

The electrode plate in this application has the maximum porosity on the outer surface side of the electrode active material layer. Therefore, based on this application, the infiltration rate of the electrolyte at the electrode plate can be significantly increased. From the aspect of battery productivity, the infiltration rate of the electrolyte to the electrode plate is improved, which can shorten the time for electrolyte infiltrating the cell and greatly improve the battery productivity. From the aspect of battery performance, the infiltration of the electrolyte to the electrode plate is improved, which can improve the interface characteristics of the battery and increase electrochemical reaction activity of the electrode plate. In addition, the electrode plate has a high porosity on an outer surface side thereof, which facilitates active ions to travel between the electrode plates, thereby improving kinetic performance and high- and low-temperature performance of the battery.

In some embodiments, the electrode active material layer has a minimum porosity on a bottom surface side thereof that is opposite the outer surface side. In this application, the outer surface side refers to a side of the electrode active material layer facing the negative electrode. In some embodiments, the porosity of the electrode active material layer of the electrode plate in this application may be reduced monotonously from an outer surface side to a bottom surface side. The electrode active material layer in this application may have a minimum porosity at the bottom surface side due to enriched binder with respect to an outer surface side. Therefore, an adhesion between the electrode active material layer and the current collector may be increased. In addition, the electrode active material layer in this application has a minimum porosity on the bottom surface side thereof, and therefore, the electrolyte is not easy to contact the binder enriched on the bottom surface side, thereby reducing a risk of the electrode plate coming off due to the swelling of the binder.

In some embodiments, when the electrode plate is a positive electrode plate, a compacted density is 2.1 g/cm$^3$-3.8 g/cm$^3$; and when the electrode plate is a negative electrode plate, the compacted density is 1.3 g/cm$^3$-1.8 g/cm$^3$. Optionally, the compacted density of the positive electrode plate may be 2.2 g/cm$^3$-3.7 g/cm$^3$, 2.3 g/cm$^3$-3.6 g/cm$^3$, 2.4 g/cm$^3$-3.5 g/cm$^3$, 2.5 g/cm$^3$-3.7 g/cm$^3$, 2.5 g/cm$^3$-3.4 g/cm$^3$, 2.3 g/cm$^3$-3.3 g/cm$^3$, 2.6 g/cm$^3$-3.7 g/cm$^3$, 2.7 g/cm$^3$-3.6 g/cm$^3$, 2.8 g/cm$^3$-3.5 g/cm$^3$, 2.9 g/cm$^3$-3.7 g/cm$^3$, 3.0 g/cm$^3$-3.7 g/cm$^3$, 3.1 g/cm$^3$-3.7 g/cm$^3$, 3.2 g/cm$^3$-3.7 g/cm$^3$, and 3.3 g/cm$^3$-3.7 g/cm$^3$. The compacted density of the negative electrode plate may be 1.3 g/cm$^3$-1.8 g/cm$^3$, 1.4 g/cm$^3$-1.8 g/cm$^3$, 1.4 g/cm$^3$-1.7 g/cm$^3$, 1.4 g/cm$^3$-1.6 g/cm$^3$, 1.3 g/cm$^3$-1.6 g/cm$^3$, 1.3 g/cm$^3$-1.7 g/cm$^3$, 1.3 g/cm$^3$-1.5 g/cm$^3$, 1.4 g/cm$^3$-1.5 g/cm$^3$, 1.5 g/cm$^3$-1.7 g/cm$^3$, and 1.5 g/cm$^3$-1.8 g/cm$^3$.

In this application, both the positive electrode plate and the negative electrode plate may be implemented by means of transferring. Therefore, electrode plates of different compacted densities can be prepared according to a specific requirement, and electrode plates with a higher compacted density (because the electrode plate has a maximum porosity on an outer surface side thereof, it is less likely to be densified by compressing) can be prepared than the conventional electrode plates. Therefore, energy density of a battery is improved, while the rate performance and high- and low-temperature performance of the battery are maintained.

A second embodiment of this application provides a preparation method of electrode plate, including the following steps:

Step (1): Provide an electrode active material slurry, apply the electrode active material slurry on at least one surface of a polymer substrate, and perform drying to obtain an initial electrode plate that has an electrode active material layer.

Step (2): Provide a metal substrate, stack the metal substrate and the initial electrode plate in such a way that a surface of the metal substrate faces the electrode active material layer, and perform a compressing process to transfer the electrode active material layer to the surface of the metal substrate.

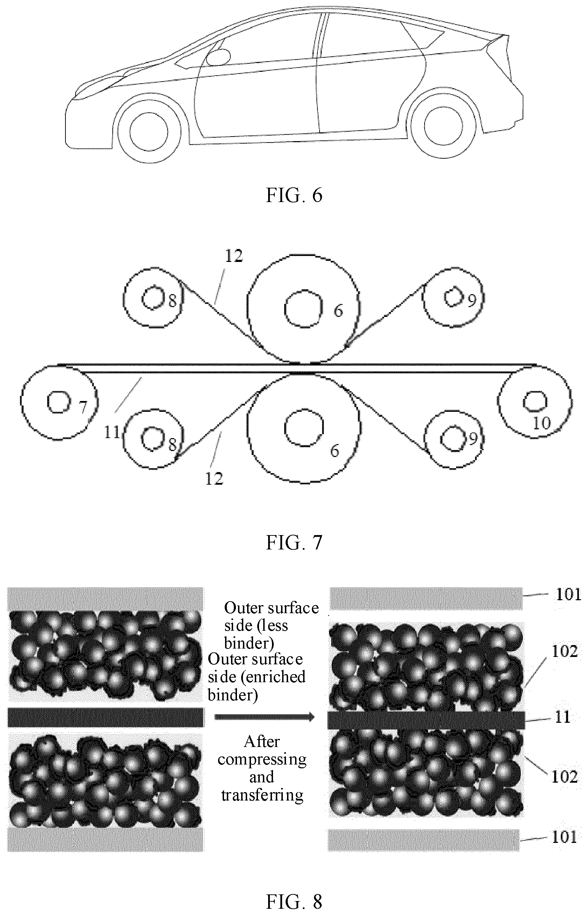

In this application, the electrode plate may be manufactured continuously on a scale by using a manufacturing device of the electrode plate shown in FIG. 7. Specifically, an initial electrode plate unwinding apparatus 8, an polymer substrate winding apparatus 9, a metal substrate unwinding apparatus 7, and an electrode plate winding apparatus 10 are controlled to continuously rotate at a corresponding speed, so that the initial electrode plate 12 and the metal substrate 11 pass through a gap between the cold pressing rollers 6 in such a way that the electrode active material layer of the initial electrode plate 12 faces a surface of the metal substrate 11 to achieve the compressing process, so as to transfer the electrode active material layer to the surface of the metal substrate in one step.

In this application, structures of the (initial) electrode plate before and after the compressing process are shown in FIG. 8. It can be learned from FIG. 8 that, before compressing and transferring, the electrode active material layer 102 is attached to the polymer substrate 101. After compressing and transferring, the electrode active material layer 102 has been transferred to the metal substrate 11.

In step (1), in addition to selecting a polymer substrate to replace a conventional metal current collector, a conventional electrode plate coating process (or may perform fine tuning according to an actual requirement) may be directly used for another process in step (1).

In this application, the metal substrate in step (2) may be a substrate composed of a metal and/or an alloy thereof or a composite substrate formed by a metal layer on a polymer material matrix (provided that there is a extensibility difference between the composite substrate and a polymer substrate used together, and the electrode active material layer can be transferred to a surface of the metal layer in the composite substrate by the compressing process). The composite substrate may include a polymer material matrix and a metal layer formed on at least one surface of the polymer material matrix. The composite substrate may be formed by a metal material (for example, aluminum, aluminum alloy, nickel, nickel alloy, titanium, titanium alloy, silver, and silver alloy) on the polymer material matrix (for example, matrices of polypropylene (PP), polyethylene terephthalate (PET), polybutylene terephthalate (PBT), polystyrene (PS), and polyethylene (PE)).

In step (2), because there is a extensibility difference between the polymer substrate of the initial electrode plate and the metal substrate (for example, an aluminum foil or a copper foil) during compressing, the electrode active material layer on the polymer substrate may be directly transferred to the metal substrate by the compressing process, so as to reverse an upper layer and a lower layer of the electrode plate. Finally, the electrode plate obtained has fewer binders in upper layer (outer surface side) and more binders in lower layer (bottom surface side), and has a maximum porosity on the outer surface side of the electrode active material layer.

In step (2), when the electrode active material layer is transferred to the metal substrate, neither an additional interface binder and transfer binder nor a heating or lighting process is required, and correspondingly, there is no problem such as an increase in energy consumption, interpenetration between the coated active material slurry and the interface binder, a decrease in the energy density of the battery due to a loss of residual electrode active material in the interface binder layer, a risk of the electrode plate coming off (especially at a later stage of a battery cycle) under a high temperature condition, or deterioration of battery performance.

Therefore, the preparation method of electrode plate in this application can be used to produce the electrode plate in this application easily in low cost and on a large scale (the electrode slurry may be manufactured by using currently mature materials and formula systems, with no need to coordinate with a new material, with no need to adjust the formula, or even with no need to perform special treatment on a current collector, and therefore, control is simple, and mass production is easier to implement (easy and quick to apply to a current battery production process).

In addition, compared with the prior art, in the preparation method of electrode plate in this application, because there is no interpenetration between the coated active material slurry and the interface binder, consistency and a product rate of the electrode plate prepared are both excellent. During cycling of the batter, the electrode plate is not prone to a problem of metal precipitation (for example, lithium precipitation) of the active material, and does not have a problem of a decrease in energy density of the battery caused by losses of residual electrode active material in the interface binder layer. Further, there is no need to use a transfer binder (for example, an ester-based binder). Therefore, the electrode plate of this application is not prone to the risk of coming off under a high temperature (50°C-60°C) condition (especially at a later stage of the cycling of the battery), and there will be no side reactions and deterioration of battery performance due to the migration of ester binder into the electrolyte.

In some embodiments, a pressure of the compressing process may be 20 tons-80 tons. In this application, when the pressure of the compressing process falls within the foregoing range, it can be ensured that the electrode active material layer on the polymer substrate is directly transferred to the metal substrate by the compressing process, and a problem that the electrode active material layer is broken due to excessive pressure in the compressing process or that the electrolyte is difficult to infiltrate the electrode plate or active ions are difficult to travel between electrode plates due to excessive compacted density (thereby deteriorating rate performance of the battery) is avoided.

In some embodiments, the compressing process may be rolling. In this application, rolling in a compressing process can match a current battery manufacturing process.

In some embodiments, the polymer substrate may be selected from at least one of polyethylene terephthalate (PET) film, polypropylene (PP) film, polyethylene (PE) film, polyvinyl alcohol (PVA) film, polyvinylidene fluoride (PVDF) film, polytetrafluoroethylene (PTFE) film, polycarbonate (PC) film, polyvinyl chloride (PVC) film, polymethyl methacrylate (PMMA) film, polyimide (PI) film, polystyrene (PS) film, and polybenzimidazole (PBI) film. In this application, a composition of the polymer substrate is not particularly limited, provided that there is an extensibility difference between the polymer substrate and the metal substrate used together, and the electrode active material layer on the polymer substrate may be transferred to the metal substrate by a compressing process in one step.

In some embodiments, a thickness of the polymer substrate may be 25 μm-500 μm. In this application, a thickness of the polymer substrate is not particularly limited, provided that there is an appropriate extensibility difference between the polymer substrate and the metal substrate used together, and the electrode active material layer on the polymer substrate may be transferred to the metal substrate by a compressing process in one step.

In some embodiments, the metal substrate may be an aluminum foil or a copper foil. In this application, a composition of the metal substrate is not particularly limited, and a metal substrate conventional in the art may be used as long as there is an appropriate extensibility difference between the polymer substrate and the metal substrate used together, and the electrode active material layer on the polymer substrate may be transferred to the metal substrate by a compressing process in one step.

A third embodiment of this application may provide a secondary battery, and the secondary battery includes the electrode plate according to any one of the foregoing embodiments.

In this embodiment, a type of the electrode plate is not specifically limited. For example, the electrode plate may be a positive electrode plate or a negative electrode plate.

Detailed description of embodiments of the present invention

The following describes a secondary battery, a battery module, a battery pack, and an electric apparatus in this application in detail with appropriate reference to the accompanying drawings.

An embodiment of this application provides a secondary battery. Normally, the secondary battery includes a positive electrode plate, a negative electrode plate, an electrolyte, and a separator. During charging and discharging of the battery, active ions such as lithium ions are intercalated and deintercalated back and forth between the positive electrode plate and the negative electrode plate. The electrolyte conducts the active ions between the positive electrode plate and the negative electrode plate. The separator is disposed between the positive electrode plate and the negative electrode plate to mainly prevent a short circuit between positive and negative electrodes and to allow the active ions to pass through.

[Positive electrode plate]

The positive electrode plate in this application is a positive electrode plate prepared by using the foregoing preparation method of electrode plate. The positive electrode plate may include a positive electrode current collector and a positive electrode active material layer disposed on at least one surface of the positive electrode current collector. The positive electrode active material layer may include a positive electrode active material, and optionally, a binder and a conductive agent.

In an example, the positive electrode current collector includes two back-to-back surfaces in a thickness direction of the positive electrode current collector, and the positive electrode active material layer is disposed on either or both of the two back-to-back surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (for example, aluminum, aluminum alloy, nickel, nickel alloy, titanium, titanium alloy, silver, and silver alloy) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for a secondary battery in the art. In an example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive-electrode active materials for secondary batteries. One of these positive electrode active materials may be used alone, or two or more of them may be used in combination. An example of the lithium transition metal oxide may include but is not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. An example of the olivine-structured lithium-containing phosphate may include but is not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

When the secondary battery is a sodium-ion battery, the positive electrode may include at least one positive electrode active material selected from layered transition metal oxide, polyanionic compound, Prussian blue compound, sulfide, nitride, carbide, and titanate. Optionally, the positive electrode active material includes but is not limited to at least one selected from $NaCrO_2$, $Na_2Fe_2(SO_4)_3$, molybdenum disulfide, tungsten disulfide, vanadium disulfide, titanium disulfide, hexagonal boron nitride, carbon-doped hexagonal boron nitride, titanium carbide, tantalum carbide, molybdenum carbide, silicon carbide, $Na_2Ti_3O_7$, $Na_2Ti_6O_{13}$, $Na_4Ti_5O_{12}$, $Li_4Ti_5O_{12}$, and $NaTi_2(PO_4)_3$.

In some embodiments, the positive electrode active material layer may optionally further include another additive such as a lithium supplement. The pre-lithiation agent may include a pre-lithiation agent usually used in the art. Specifically, the pre-lithiation agent may include at least one of $Li_6CoO_4$, $Li_5FeO_4$, $Li_3VO_4$, $Li_2MoO_3$, $Li_2RuO_3$, $Li_2MnO_2$, $Li_2NiO_2$, and $Li_2Cu_xNi_{1-x}M_yO_2$, where $0 < x \leq 1$, and $0 \leq y < 0.1$, and M is at least one of Zn, Sn, Mg, Fe, and Mn. From the perspective of increasing the specific capacity of the secondary battery and improving the rate performance of the lithium-ion battery, especially after high-temperature storage, the pre-lithiation agent preferably includes at least one of $Li_6CoO_4$, $Li_5FeO_4$, $Li_2NiO_2$, $Li_2CuO_2$, and $Li_2Cu_{0.6}Ni_{0.4}O_2$.

In some embodiments, the binder included in the positive active material layer may include at least one of groups consisting of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer may further optionally include a conductive agent. In an example, a conductive agent usually used in the art may be used. The conductive agent may include at least one of superconducting carbon, acetylene black, carbon black, Ketjen black, carbon nanotube, carbon nanorod, graphene, and carbon nanofiber.

[Negative electrode plate]

The negative electrode may include a negative electrode current collector and a negative electrode active material layer disposed on at least one surface of the negative electrode current collector. The negative electrode active material layer may include: a negative electrode active material, and optionally, a binder, a conductive agent, and other additives.

In an example, the negative electrode current collector includes two back-to-back surfaces in a thickness direction of the negative electrode current collector, and the negative electrode active material layer is disposed on either or both of the two back-to-back surfaces of the negative electrode current collector.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by forming a metal material (for example, copper, copper alloy, nickel, nickel alloy, titanium, titanium alloy, silver, and silver alloy) on the polymer material matrix (such as matrices of polypropylene (PP), polyethylene terephthalate (PET), polybutylene terephthalate (PBT), polystyrene (PS), and polyethylene (PE)).

In this embodiment in which the secondary battery is a lithium-ion battery, the negative electrode active material may be a negative electrode active material for a lithium-ion battery well known in the art. In an example, the negative electrode active material may include at least one selected from artificial graphite, natural graphite, soft carbon, hard carbon, and a silicon-based material. The silicon-based material includes at least one selected from elemental silicon, silicon oxide, silicon-carbon composite, and silicon-based alloy. When the negative electrode active material includes the silicon-based material, a percentage of the silicon-based material in the total negative electrode active material by mass is 0%-30%, and optionally, 0%-10%. However, this application is not limited to these materials, and may also use other conventional materials that can be used as the negative electrode active material of the battery. One type of these negative electrode active materials may be used alone, or two or more types may be used in combination.

In the embodiment in which the secondary battery is a sodium-ion battery, the negative electrode active material may include at least one selected from natural graphite, modified graphite, artificial graphite, graphene, carbon nanotubes, carbon nanofibers, porous carbon, tin, antimony, germanium, lead, ferric oxide, vanadium pentoxide, tin dioxide, titanium dioxide, trioxide molybdenum, elemental phosphorus, sodium titanate, and sodium terephthalate Optionally, the negative electrode active material is at least one selected from natural graphite, modified graphite, artificial graphite, and graphene.

In some embodiments, the negative electrode active material layer may optionally include a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may optionally include a conductive agent. The conductive agent may be selected from at least one of superconducting carbon, acetylene black, carbon black, Ketjen black, carbon nanotube, carbon nanorod, graphene, and carbon nanofiber.

In some embodiments, the negative electrode active material layer may alternatively optionally include other additives such as a thickener (for example, sodium carboxymethyl cellulose (CMC-Na)).

In some embodiments, the negative electrode may be prepared by using the following method: the foregoing compositions used for preparing a negative electrode, for example, the positive electrode active material, conductive agent, binder, and any other compositions, are dispersed in a solvent (for example, deionized water) to form a negative electrode slurry; the negative electrode slurry is applied on the negative electrode current collector, and then processes such as drying and cold pressing are performed to obtain the negative electrode. Alternatively, in another embodiment, the negative electrode may be manufactured by using the following method: the negative electrode slurry for forming a negative electrode active material layer is applied on a separate carrier, and the film obtained through peeling from the carrier is laminated on the negative electrode current collector.

[Electrolyte]

The electrolyte conducts ions between the positive electrode plate and the negative electrode plate. The electrolyte is not limited to any specific type in this application, and may be selected as required. For example, the electrolyte may be in a liquid or gel state.

In addition, the electrolyte in the embodiments of this application includes an additive. The additive may include an additive commonly used in the art. The additive may include, for example, a halogenated alkylene carbonate compound (for example, difluoroethylene carbonate), pyridine, triethyl phosphite, triethanolamine, cyclic ether, ethylenediamine, (condensed) glycol dimethyl ether, hexamethylphosphate triamide, nitrobenzene derivative, sulfur, quinoneimine dye, N-substituted oxazolidinone, N,N-substituted imidazolidine, ethylene glycol dialkyl ether, ammonium salt, pyrrole, 2-methoxyethanol, or aluminium chloride. In this case, based on a total weight of the electrolyte, a percentage of the contained additive may be 0.1wt% to 5wt%, or is adjusted by persons skilled in the art based on actual demands.

In some embodiments, the electrolyte is a liquid electrolyte. The electrolyte solution includes an electrolytic salt and a solvent.

In the embodiment in which the secondary battery is a lithium-ion battery, the electrolyte salt may include at least one selected from $LiPF_6$, $LiBF_4$, $LiN(SO_2F)_2$ (LiFSI), $LiN(CF_3SO_2)_2$ (LiTFSI), $LiClO_4$, $LiAsF_6$, $LiB(C_2O_4)_2$ (LiBOB), and $LiBF_2C_2O_4$ (LiDFOB).

In the embodiment in which the secondary battery is a sodium-ion battery, the electrolyte salt may include at least one selected from NaPF6, $NaClO_4$, $NaBCl_4$, $NaSO_3CF_3$, and $Na(CH_3)C_6H_4SO_3$.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. A material of the soft pack may be plastic. Polypropylene, polybutylene terephthalate, polybutylene succinate, and the like may be listed as the plastic.

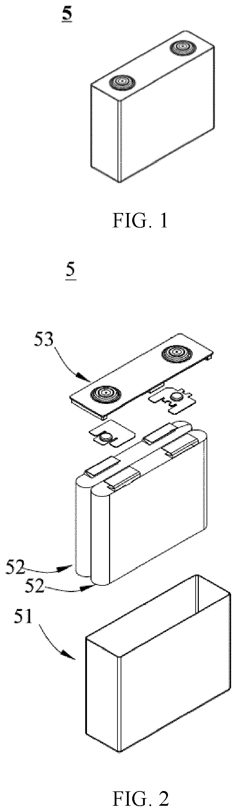

This application does not impose special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

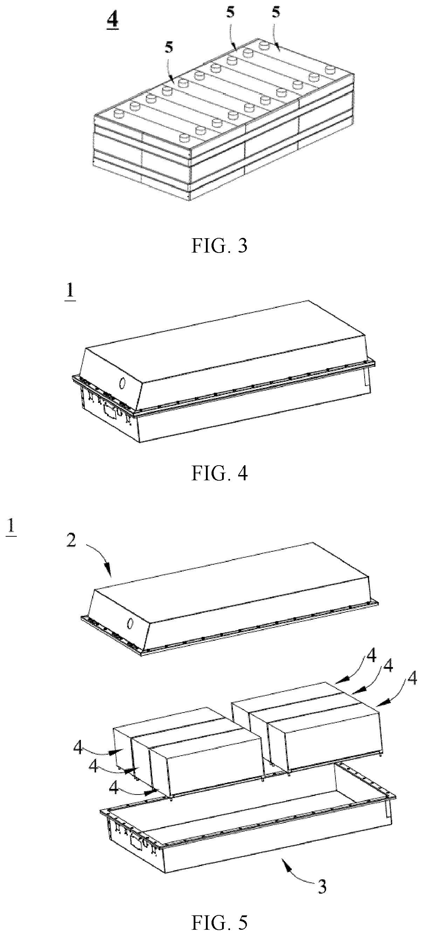

FIG. 3 shows a battery module 4 as an example. Referring to FIG. 3, in the battery module 4, a plurality of secondary batteries 5 are sequentially arranged in a length direction of the battery module 4. Certainly, the plurality of secondary batteries 5 may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery modules may be further assembled into a battery pack. The battery pack may include one or more battery modules, and a specific quantity may be selected by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

## Example

The following describes in detail examples in this application. The examples described below are exemplary and only used to explain this application, but cannot be understood as a limitation of this application. Examples whose technical solutions or conditions are not specified are made based on technical solutions or conditions described in documents in the art, or made based on the product specification. The reagents or instruments used are all conventional products that can be purchased on the market if no manufacturer is indicated.

## Preparation of electrode plate

The following describes in detail a preparation method of electrode plate in this application. The slurry of the electrode active material containing the electrode active material is applied on a polyethylene terephthalate (PET) film as a polymer substrate, and dried. When the electrode plate is a positive electrode plate or a negative electrode plate, a proportion relationship of the electrode active material is as follows: for positive electrode active material: binder: conductive carbon: dispersing agent = (93%-98.2%):(1%-4%):(0.7%-2%):(0-1%); and for negative active material: binder: thickener: conductive carbon = (93%-98.5%):(0.5%-2.5%):(0.5%-2.5%):(0.5%-2%). The copper/aluminum foil, as a metal substrate, is disposed between two layers of polyethylene terephthalate (PET) film, where one side coated with the electrode active material layer faces the copper/aluminum foil (that is, as a current collector). Because the extensibility of the polyethylene terephthalate (PET) film is different from that of a current collector (copper/aluminum foil), the electrode active material layer can be transferred from the polyethylene terephthalate (PET) film to the current collector by the compressing process, so that an upper layer and a lower layer of the electrode active material layer are reversed, and the electrode plate of this application is obtained.

A compacted density of the positive electrode plate compressed is 2.3 $g/cm^3$-3.6 $g/cm^3$, and a compacted density of the negative electrode plate compressed is 1.3 $g/cm^3$-1.7 $g/cm^3$. The following Table 1 lists a type of the electrode active material and a pressure of the compressing process.

The following describes in detail the examples and the comparative examples of the secondary battery.

### Example 1

Preparation of positive electrode plate

A positive active material lithium iron phosphate (LiFePO4), a binder polyvinylidene fluoride (PVDF), a conductive agent acetylene black, and a dispersing agent polyacrylic acid (PAA) were dissolved at a mass ratio of 97:2.2:0.7:0.1 in a solvent N-methylpyrrolidone (NMP), and fully stirred and mixed to obtain a positive electrode slurry; and the positive electrode plate was prepared according to the foregoing preparation method of electrode plate. The compacted density of the positive electrode plate after the compressing process was 2.5 $g/cm^3$.

Preparation of negative electrode plate

A negative active material artificial graphite, a conductive agent acetylene black, a binder styrene-butadiene rubber (SBR), and a thickener sodium carboxy methyl cellulose (CMC-Na) were dissolved in a solvent deionized water at a mass ratio of 96.6:0.7:1.5:1.2, and fully stirred and well mixed to obtain a negative electrode slurry; and the negative electrode plate was prepared according to the foregoing preparation method of electrode plate. The compacted density of the negative electrode plate after the compressing process was 1.6 $g/cm^3$.

Preparation of electrolyte

In an argon atmosphere glove box (atmosphere: $H_2O$ < 0.1ppm, and $O_2$ < 0.1ppm), 1 mol/L $LiPF_6$ was dissolved in an organic solvent (EC/DMC/EMC = 1/1/1 (mass ratio)), and the mixture was stirred uniform to obtain a corresponding electrolyte.

Preparation of secondary battery

The positive electrode plate, a polyethylene film with a thickness of 14 $\mu$m used as a separator, and the negative electrode plate were stacked in sequence, so that the separator functioned as isolation between the positive electrode plate and the negative electrode plate, and was wound to obtain a bare cell. The bare cell was placed in an aluminum plastic film bag of the battery housing, the foregoing electrolyte was injected to the aluminum plastic film bag after the bare cell was dried, and the secondary battery was prepared after processes such as formation and standing.

### Example 2

A secondary battery was prepared according to the method of Example 1, except that a mixing mass ratio of a positive electrode active material lithium iron phosphate (LiFePO$_4$), a binder polyvinylidene fluoride (PVDF), a conductive agent acetylene black, and a dispersing agent polyacrylic acid (PAA) was 96.6:2.6:0.7:0.1.

### Example 3

A secondary battery was prepared according to the method of Example 1, except that a mixing mass ratio of a positive electrode active material lithium iron phosphate (LiFePO$_4$), a binder polyvinylidene fluoride (PVDF), a conductive agent acetylene black, and a dispersing agent polyacrylic acid (PAA) was 97.4:1.8:0.7:0.1.

### Example 4

A secondary battery was prepared according to the method of Example 1, except that lithium iron phosphate

(LiFePO$_4$) is replaced by a ternary oxide LiNi$_{0.5}$Mn$_{0.3}$Co$_{0.2}$O$_2$, a mass ratio of the ternary oxide LiNi$_{0.5}$Mn$_{0.3}$Co$_{0.2}$O$_2$, a binder polyvinylidene fluoride (PVDF), and a conductive agent acetylene black was 96.2:2.7:1.1, and a compacted density of the positive electrode plate prepared was 3.45 g/cm$^3$.

**Example 5**

A secondary battery was prepared according to the method of Example 1, except that lithium iron phosphate (LiFePO$_4$) was replaced by a ternary oxide LiNi$_{0.5}$Mn$_{0.3}$Co$_{0.2}$O$_2$, a mass ratio of the ternary oxide LiNi$_{0.5}$Mn$_{0.3}$Co$_{0.2}$O$_2$, a binder polyvinylidene fluoride (PVDF), and a conductive agent acetylene black was 95.7:3.2:1.1, and a compacted density of the positive electrode plate prepared was 3.45 g/cm$^3$.

**Example 6**

A secondary battery was prepared according to the method of Example 1, except that lithium iron phosphate (LiFePO$_4$) was replaced by a ternary oxide LiNi$_{0.5}$Mn$_{0.3}$Co$_{0.2}$O$_2$, a mass ratio of the ternary oxide LiNi$_{0.5}$Mn$_{0.3}$Co$_{0.2}$O$_2$, a binder polyvinylidene fluoride (PVDF), and a conductive agent acetylene black was 95.2:3.7:1.1, and a compacted density of the positive electrode plate prepared was 3.45 g/cm$^3$.

**Examples 7 to 19**

The secondary batteries of Examples 7 to 19 were prepared according to the method of Example 1, except that Examples 7 to 19 were different from Example 1 in the parameters in the following Table 1.

**Comparative Example 1**

A secondary battery was prepared according to the method of Example 1, except that a positive electrode plate and a negative electrode plate were prepared according to the following conventional method.

Preparation of positive electrode plate

A positive electrode active material lithium iron phosphate (LiFePO$_4$), a binder polyvinylidene fluoride (PVDF), a conductive agent acetylene black, and a dispersing agent polyacrylic acid (PAA) were dissolved at a mass ratio of 97:2.2:0.7:0.1 in a solvent N-methylpyrrolidone (NMP), and fully stirred and mixed to obtain a positive electrode slurry; and the positive electrode slurry was evenly applied on an aluminum foil of the positive electrode collector, the positive electrode plate was obtained after drying, cold pressing, and a compacted density of the prepared positive electrode plate was 2.5 g/cm$^3$.

Preparation of negative electrode plate

A negative electrode active material artificial graphite, a conductive agent acetylene black, a binder styrene-butadiene rubber (SBR), and a thickener sodium carboxy methyl cellulose (CMC-Na) were dissolved in a solvent deionized water at a mass ratio of 96.6:0.7:1.5:1.2, fully stirred and mixed to obtain negative electrode slurry; and the negative electrode slurry was evenly applied on a copper foil of the negative electrode collector for one or more times, the positive electrode plate was obtained after drying, cold pressing, where a pressure of the compressing process was 50 tons-80 tons, and a compacted density of the negative electrode plate prepared was 1.6 g/cm$^3$.

**Comparative Example 2**

A secondary battery was prepared according to the method of Comparative Example 1, except that lithium iron phosphate (LiFePO$_4$) was replaced by a ternary oxide LiNi$_{0.5}$Mn$_{0.3}$Co$_{0.2}$O$_2$, a mass ratio of the ternary oxide LiNi$_{0.5}$Mn$_{0.3}$Co$_{0.2}$O$_2$, a binder polyvinylidene fluoride (PVDF), and a conductive agent acetylene black was 96.2:1.1:2.7, and a compacted density of the positive electrode plate prepared was 3.45 g/cm$^3$.

**Tests**

Test for first-cycle coulombic efficiency:

For a secondary battery whose positive electrode active material was LiFePO$_4$, the prepared secondary battery was left standing at 25°C for 30 minutes, then charged to a voltage of 3.65 V at a constant current of 0.33C, further charged to a current of 0.05C at a constant voltage of 3.65 V, left standing for 5 minutes, and then discharged to a voltage of 2.5 V at a constant current of 0.33C. In this case, the charge capacity and the discharge capacity were C10 and C11 respectively.

For a secondary battery whose positive electrode active material was $LiNi_{0.5}Mn_{0.3}Co_{0.2}O_2$, the prepared secondary battery was left standing at 25°C for 30 minutes, then charged to a voltage of 4.2 V at a constant current of 0.33C, further charged to a current of 0.05C at a constant voltage of a 4.2 V, left standing for 5 minutes, and then discharged to a voltage of 3 V at a constant current of 0.33C. In this case, the charge capacity and the discharge capacity were C20 and C21 respectively.

The first-cycle coulombic efficiency of the secondary battery might be calculated as follows:

$$\text{first-cycle coulombic efficiency of the secondary battery } (\%) = (C11/C10) \times 100\%;$$

or

$$\text{first-cycle coulombic efficiency of the secondary battery } (\%) = (C21/C20) \times 100\%.$$

Test for DCR (DC impedance) performance:

Test method:

(1) At 25 °C, the secondary battery was charged to the full charge status at 0.33C, and discharged to 0.1Cn (where Cn represents the battery capacity) at 0.33C to adjust the secondary battery to 90% SOC. The secondary battery was left standing for 30 minutes, where a standing end voltage of the is V1; the secondary battery was discharged for 30 seconds at 3C, where a discharge cut-off voltage was V2; and the secondary battery was left standing for 40 seconds, and charged for 30 seconds at 3C.

(2) At 25°C, the secondary battery was charged to a full charge status at 0.33C, and discharged to 0.5Cn (where Cn represents the battery capacity) at 0.33C to adjust the secondary battery to 50% SOC. The secondary battery was left standing for 30 minutes, where a standing end voltage was V1; the secondary battery was discharged for 30 seconds at 3C, where a discharge cut-off voltage was V2; and the secondary battery was discharged for 30 seconds at 3C, left standing for 40 seconds, and charged for 30 seconds at 3C.

(3) At 25°C, the secondary battery was charged to a full charge status at 0.33C, and discharged to 0.9Cn (where Cn represents the battery capacity) at 0.33C to adjust the secondary battery to 10% SOC. The secondary battery was left standing for 30 minutes, where a standing end voltage was V1; the secondary battery was discharged for 30 seconds at 3C, where a discharge cut-off voltage was V2; and the secondary battery was discharged for 30 seconds at 3C, left standing for 40 seconds, and charged for 30 seconds at 3C.

Calculation method: DCR = (V1 - V2)/I, where V1 is a standing end voltage, V2 is a discharge cut-off voltage, and I is a discharge current.

Test of high- and low-temperature performance:

Test method: the secondary battery was charged to the full charge state at 0.5C at 25°C for 30 minutes, and discharged to a cut-off voltage at 0.5C. The discharge capacity was measured.

The temperature of the secondary battery was adjusted to 60°C. The secondary battery was left standing for 2 hours, charged to the full charge state at 0.5C, left standing for 30 minutes, and discharged to the cut-off voltage at 0.5C. The discharge capacity was measured.

The temperature of the secondary battery was adjusted to 0°C. The secondary battery was left standing for 2 hours, charged to the full charge state at 0.5C, left standing for 30 minutes, and discharged to the cut-off voltage at 0.5C. The discharge capacity was measured.

The temperature of the secondary battery was adjusted to -20°C. The secondary battery was left standing for 2 hours, charged to the full charge state at 0.5C, left standing for 30 minutes, and discharged to the cut-off voltage at 0.5C. The discharge capacity was measured.

The discharge cut-off voltage of the secondary battery whose positive electrode active material was $LiFePO_4$ was 2.5 V, and the discharge cut-off voltage of the secondary battery whose positive electrode active material was $LiNi_{0.5}Mn_{0.3}Co_{0.2}O_2$ was 3 V

Calculation method of capacity retention rate at different temperatures: Discharge capacity at a different temperature/discharge capacity at 25°C.

Test for rate charging and discharging performance:

Rate charging: The secondary battery was charged to the full charge status at 0.33C, left standing for 30 minutes, and discharged to the cut-off voltage at 0.33C. A charging capacity was measured, and the secondary battery was left standing for 30 minutes. The secondary battery was charged to the full charge status at 1C, left standing for 30 minutes, and discharged to the cut-off voltage at 0.33C. A charging capacity was measured, and the secondary battery was left standing for 30 minutes. The secondary battery was charged to the full charge status at 3C, left standing for 30 minutes, and discharged to the cut-off voltage at 0.33C. A charging capacity was measured, and the secondary battery was left standing for 30 minutes. The secondary battery was charged to the full charge status at 6C, left standing for 30 minutes, and discharged to the cut-off voltage at 0.33C. A charging capacity was measured, and the secondary battery was left standing for 30 minutes.

The discharge cut-off voltage of the secondary battery whose positive electrode active material was $LiFePO_4$ was 2.5 V, and a charge cut-off voltage was 3.65 V; and the cut-off voltage of the secondary battery whose positive electrode active material is $LiNi_{0.5}Mn_{0.3}Co_{0.2}O_2$ is 3 V, and a discharge cut-off voltage was 4.2 V

Calculation method of capacity retention rate at different rates: charging capacity at a different rate/charging capacity at 0.33C.

Rate discharging: The secondary battery was charged to the full charge status at 0.33C, left standing for 30 minutes, and discharged to the cut-off voltage at 0.33C. A discharging capacity was measured, and the secondary battery was left standing for 30 minutes. The secondary battery was charged to full charge status at 0.33C, left standing for 30 minutes, and discharged to the cut-off voltage at 1C. A discharging capacity was measured, and the secondary battery was left standing for 30 minutes. The secondary battery was charged to full charge status at 0.33C, left standing for 30 minutes, and discharged to the cut-off voltage at 3C. A discharging capacity was measured, and the secondary battery was left standing for 30 minutes. The secondary battery was charged to full charge status at 0.33C, left standing for 30 minutes, and discharged to the cut-off voltage at 6C. A discharging capacity was measured, and the secondary battery was left standing for 30 minutes.

The discharge cut-off voltage of the secondary battery whose positive electrode active material was $LiFePO_4$ was 2.5 V, and a charge cut-off voltage was 3.65 V; and the discharge cut-off voltage of the secondary battery whose positive electrode active material was $LiNi_{0.5}Mn_{0.3}Co_{0.2}O_2$ was 3 V, and a charge cut-off voltage was 4.2 V.

Calculation method of capacity retention rate at different rates: discharging capacity at a different rate/discharge capacity at 0.33C.

Test for ratio of binders floating:

Test method: The powder on the outer surface side and the bottom surface side of the electrode plate was scraped. 10 mg-30 mg sample was weighed and then put in an $Al_2O_3$ crucible to be even. The crucible was covered with a crucible cover. Test was performed by using differential scanning thermal weightlessness analysis. The following parameters were set: in nitrogen atmosphere, purge gas flow rate being 60 mL/min, protection gas flow rate being 20 mL/min, temperature range being 35°C-600°C, and temperature rise rate being 10°C-30°C. The test was performed. An electronic balance with an accuracy of one ten-thousandth was used to evaluate the difference in powder mass before and after heating, and the curve of weight loss rate versus temperature was obtained to determine the amount of the binder.

Method for calculating the ratio of the binder floating upward: (amount of the binder on the outer surface side - amount of the binder on the bottom surface side)/amount of the binder on the bottom surface side × 100%

Test for infiltration rate of electrolyte to electrode plate:

Test method: a specific amount of electrolyte (2 cm height) was suctioned with a capillary tube (1 mm in diameter), so that the suction end of the capillary tube was in contact with the surface of the electrode plate. The electrode plate is a porous structure. Under a capillary force, the electrolyte in the capillary tube could be suctioned out, and a time required for the electrolyte to be completely suctioned was recorded, so as to calculate an electrolyte infiltration rate.

Calculation method of electrolyte infiltration rate: electrolyte density $\times$ volume of electrolyte in the capillary tube/time required for the electrolyte to be completely suctioned.

Results of the foregoing tests and parameters of the electrode plate are separately shown in the following Table 1 to Table 3.

**Table 1**

| Number | Polymer substrate (thickness; μm) | Active material | Pressure of compressing process | Preparation manner of electrode plate | First-cycle coulombic efficiency (%) | DCR (mohm) | | | High- and low-temperature test | | | |
|---|---|---|---|---|---|---|---|---|---|---|---|---|
| | | | | | | 10% SOC | 50% SOC | 90% SOC | 25°C | 60°C | 0°C | −20°C |
| Example 1 | PET (120 μm) | $LiFePO_4$ | 42 tons | Cold pressing transfer | 88.6 | 1616 | 609 | 545 | 100% | 104.2% | 69.3% | 36.9% |
| Example 2 | PET (120 μm) | $LiFePO_4$ | 42 tons | Cold pressing transfer | 87.8 | 1664 | 623 | 561 | 100% | 103.3% | 68% | 36.0% |
| Example 3 | PET (120 μm) | $LiFePO_4$ | 42 tons | Cold pressing transfer | 87.5 | 1674 | 611 | 572 | 100% | 102.5% | 67.2% | 35% |
| Example 4 | PET (120 μm) | $LiNi_{0.5}Mn_{0.3}Co_{0.2}O_2$ | 42 tons | Cold pressing transfer | 88.7% | 831.128 | 457.148 | 482.54 | 100% | 105.6% | 85.6% | 52.9% |
| Example 5 | PET (120 μm) | $LiNi_{0.5}Mn_{0.3}Co_{0.2}O_2$ | 42 tons | Cold pressing transfer | 87 | 849.804 | 466.9 | 493.12 | 100% | 105.0% | 84.9% | 50.8% |

EP 4 354 527 A1

| Number | Polymer substrate (thickness; μm) | Active material | Pressure of compressing process | Preparation manner of electrode plate | First-cycle coulombic efficiency (%) | DCR (mohm) | | | High- and low-temperature test | | | |
|---|---|---|---|---|---|---|---|---|---|---|---|---|
| | | | | | | 10% SOC | 50% SOC | 90% SOC | 25°C | 60°C | 0°C | −20°C |
| Example 6 | PET (120 μm) | $LiNi_{0.5}Mn_{0.3}Co_{0.2}O_2$ | 42 tons | Cold pressing transfer | 87.1 | 839.96 | 464.232 | 487.416 | 100% | 104.9% | 84.5% | 51.3% |
| Example 7 | PET (120 μm) | $LiFePO_4$ | 28 tons | Cold pressing transfer | 87% | 1624 | 611 | 558 | 100% | 103.1% | 69.8% | 36.4% |
| Example 8 | PET (120 μm) | $LiFePO_4$ | 54 tons | Cold pressing transfer | 86.5% | 1629 | 615 | 554 | 100% | 102.8% | 68% | 35.8% |
| Example 9 | PET (120 μm) | $LiFePO_4$ | 66 tons | Cold pressing transfer | 85% | 1643 | 623 | 578 | 100% | 101.7% | 67.9% | 35.2% |
| Example 10 | PET (120 μm) | $LiFePO_4$ | 78 tons | Cold pressing transfer | 85% | 1650 | 637 | 586.5 | 100% | 102.3% | 64.5% | 33% |
| Example 11 | Polypropylene (120 μm) | $LiFePO_4$ | 42 tons | Cold pressing transfer | 88.7% | 1620 | 600 | 550 | 100% | 104.1% | 69% | 36% |

| Number | Polymer substrate (thickness; μm) | Active material | Pressure of compressing process | Preparation manner of electrode plate | First-cycle coulombic efficiency (%) | DCR (mohm) | | | High- and low-temperature test | | | |
|---|---|---|---|---|---|---|---|---|---|---|---|---|
| | | | | | | 10% SOC | 50% SOC | 90% SOC | 25°C | 60°C | 0°C | −20°C |
| Example 12 | Polyimide (120 μm) | LiFePO$_4$ | 42 tons | Cold pressing transfer | 88.5% | 1610 | 610 | 548 | 100% | 104.3% | 67.9% | 36.7% |
| Example 13 | Polyvinyl chloride (120 μm) | LiFePO$_4$ | 42 tons | Cold pressing transfer | 88.3% | 1632 | 603 | 540 | 100% | 103.8% | 68.4% | 35.6% |
| Example 14 | PET (28 μm) | LiFePO$_4$ | 42 tons | Cold pressing transfer | 88.5% | 1623 | 621 | 548 | 100% | 104.9% | 68% | 36% |
| Example 15 | PET (80 μm) | LiFePO$_4$ | 42 tons | Cold pressing transfer | 88% | 1633 | 619 | 536 | 100% | 104% | 69% | 35.8% |
| Example 16 | PET (160 μm) | LiFePO$_4$ | 42 tons | Cold pressing transfer | 87.6% | 1628 | 616 | 538 | 100% | 103.8% | 68.5% | 36.2% |
| Example 17 | PET (280 μm) | LiFePO$_4$ | 42 tons | Cold pressing transfer | 87% | 1634 | 623 | 543 | 100% | 103% | 67.8% | 35.8% |

18

| Number | Polymer substrate (thickness; μm) | Active material | Pressure of compressing process | Preparation manner of electrode plate | First-cycle coulombic efficiency (%) | DCR (mohm) | | | High- and low-temperature test | | | |
|---|---|---|---|---|---|---|---|---|---|---|---|---|
| | | | | | | 10% SOC | 50% SOC | 90% SOC | 25°C | 60°C | 0°C | −20°C |
| Example 18 | PET (360 μm) | $LiFePO_4$ | 42 tons | Cold pressing transfer | 87% | 1639 | 629 | 548 | 100% | 102.8% | 67.9% | 35% |
| Example 19 | PET (480 μm) | $LiFePO_4$ | 42 tons | Cold pressing transfer | 86.7% | 1642 | 631 | 555 | 100% | 102.5% | 67% | 34.5 |
| Comparative Example 1 | — | $LiFePO_4$ | / | Normal coating | 87.5 | 1772 | 693 | 592 | 100% | 103% | 63% | 32% |
| Comparative Example 2 | — | $LiNi_{0.5}Mn_{0.3}Co_{0.2}O_2$ | / | Normal coating | 88.7% | 903.4 | 496.9 | 524.5 | 100% | 102.5% | 81.5% | 50.4% |

**Table 2**

| Group | Active material | Pressure of compressing process | Preparation manner of electrode plate | Charge rate test | | | | Discharge rate test | | | |
|---|---|---|---|---|---|---|---|---|---|---|---|
| | | | | 0.33C | 1C | 3C | 6C | 0.33C | 1C | 3C | 6C |
| Example 1 | $LiFePO_4$ | 42 tons | Cold pressing transfer | 100% | 94% | 61% | 20% | 100% | 92% | 74% | 35% |
| Example 2 | $LiFePO_4$ | 42 tons | Cold pressing transfer | 100% | 93.3% | 60% | 19% | 100% | 91% | 72.7% | 33% |
| Example 3 | $LiFePO_4$ | 42 tons | Cold pressing transfer | 100% | 93% | 58.9% | 17.9% | 100% | 89.3% | 71% | 31.8% |
| Example 4 | $LiNi_{0.5}Mn_{0.3}Co_{0.2}O_2$ | 42 tons | Cold pressing transfer | 100% | 96% | 84% | 41% | 100% | 91% | 76% | 33% |
| Example 5 | $LiNi_{0.5}Mn_{0.3}Co_{0.2}O_2$ | 42 tons | Cold pressing transfer | 100% | 95% | 83.2% | 38% | 100% | 90% | 75% | 31.3% |
| Example 6 | $LiNi_{0.5}Mn_{0.3}Co_{0.2}O_2$ | 42 tons | Cold pressing transfer | 100% | 94.4% | 80% | 37.2% | 100% | 90% | 74% | 29.8% |
| Example 7 | $LiFePO_4$ | 28 tons | Cold pressing transfer | 100% | 93% | 58.2% | 19.1% | 100% | 91% | 72.8% | 34% |
| Example 8 | $LiFePO_4$ | 54 tons | Cold pressing transfer | 100% | 92.6% | 59% | 18.5% | 100% | 91.3% | 71% | 33% |
| Example 9 | $LiFePO_4$ | 66 tons | Cold pressing transfer | 100% | 92% | 58% | 16% | 100% | 90.7% | 70% | 32% |
| Example 10 | $LiFePO_4$ | 78 tons | Cold pressing transfer | 100% | 91% | 55.4% | 11.8% | 100% | 90% | 68% | 29% |
| Example 11 | $LiFePO_4$ | 42 tons | Cold pressing transfer | 100% | 93.6% | 61% | 18.9% | 100% | 92.1% | 73.4% | 36% |
| Example 12 | $LiFePO_4$ | 42 tons | Cold pressing transfer | 100% | 94.1% | 62% | 20.4% | 100% | 92.3% | 74.1% | 36.4% |
| Example 13 | $LiFePO_4$ | 42 tons | Cold pressing transfer | 100% | 93.8% | 60.8% | 19.1% | 100% | 91.1% | 73.8% | 34.3% |
| Example 14 | $LiFePO_4$ | 42 tons | Cold pressing transfer | 100% | 92.8% | 58.9% | 17.7% | 100% | 90.1% | 72% | 34.4% |
| Example 15 | $LiFePO_4$ | 42 tons | Cold pressing transfer | 100% | 93% | 60.3% | 19% | 100% | 90% | 73.8% | 35% |
| Example 16 | $LiFePO_4$ | 42 tons | Cold pressing transfer | 100% | 93.2% | 59.7% | 18.8% | 100% | 90.9% | 73% | 34.8% |
| Example 17 | $LiFePO_4$ | 42 tons | Cold pressing transfer | 100% | 92.4% | 59% | 18% | 100% | 90% | 72.4% | 34% |
| Example 18 | $LiFePO_4$ | 42 tons | Cold pressing transfer | 100% | 91.7% | 58% | 17.3% | 100% | 89.6% | 71.2 | 33% |
| Example 19 | $LiFePO_4$ | 42 tons | Cold pressing transfer | 100% | 91.3% | 57.2% | 17% | 100% | 88.4% | 71% | 34.2% |

(continued)

| Group | Active material | Pressure of compressing process | Preparation manner of electrode plate | Charge rate test | | | | Discharge rate test | | | |
|---|---|---|---|---|---|---|---|---|---|---|---|
| | | | | 0.33C | 1C | 3C | 6C | 0.33C | 1C | 3C | 6C |
| Comparative Example 1 | $LiFePO_4$ | - | Normal coating | 100% | 91% | 55% | 12% | 100% | 89% | 67% | 27% |
| Comparative Example 2 | $LiNi_{0.5}Mn_{0.3}Co_{0.2}O_2$ | - | Normal coating | 100% | 94.9% | 76% | 34% | 100% | 90% | 69% | 28% |

**Table 3**

| Number | Active material | Pressure of compressing process | Preparation manner of electrode plate | Ratio of binder floating upward | Infiltration rate of electrolyte to electrode plate (mg/s) |
|---|---|---|---|---|---|
| Example 1 | $LiFePO_4$ | 42 tons | Cold pressing transfer | -9.96% | 2.4 |
| Example 2 | $LiFePO_4$ | 42 tons | Cold pressing transfer | -12.11% | 2.54 |
| Example 3 | $LiFePO_4$ | 42 tons | Cold pressing transfer | -7.3% | 2.12 |
| Example 4 | $LiNi_{0.5}Mn_{0.3}Co_{0.2}O_2$ | 42 tons | Cold pressing transfer | -39.53% | 9.21 |
| Example 5 | $LiNi_{0.5}Mn_{0.3}Co_{0.2}O_2$ | 42 tons | Cold pressing transfer | -42.01% | 8.76 |
| Example 6 | $LiNi_{0.5}Mn_{0.3}Co_{0.2}O_2$ | 42 tons | Cold pressing transfer | -37.86% | 8.54 |
| Example 7 | $LiFePO_4$ | 28 tons | Cold pressing transfer | -9.12% | 2.2 |
| Example 8 | $LiFePO_4$ | 54 tons | Cold pressing transfer | -9.02% | 2.15 |
| Example 9 | $LiFePO_4$ | 66 tons | Cold pressing transfer | -8.67% | 2.17 |
| Example 10 | $LiFePO_4$ | 78 tons | Cold pressing transfer | -8.42% | 2.04 |
| Example 11 | $LiFePO_4$ | 42 tons | Cold pressing transfer | -9.87% | 2.33 |
| Example 12 | $LiFePO_4$ | 42 tons | Cold pressing transfer | -9.67% | 2.12 |
| Example 13 | $LiFePO_4$ | 42 tons | Cold pressing transfer | -9.07% | 2.24 |
| Example 14 | $LiFePO_4$ | 42 tons | Cold pressing transfer | -10% | 2.48 |
| Example 15 | $LiFePO_4$ | 42 tons | Cold pressing transfer | -9.9% | 2.3 |
| Example 16 | $LiFePO_4$ | 42 tons | Cold pressing transfer | -9.56% | 2.28 |
| Example 17 | $LiFePO_4$ | 42 tons | Cold pressing transfer | -9% | 2.14 |
| Example 18 | $LiFePO_4$ | 42 tons | Cold pressing transfer | -8.8% | 2.05 |
| Example 19 | $LiFePO_4$ | 42 tons | Cold pressing transfer | -8.74 | 1.98% |
| Comparative Example 1 | $LiFePO_4$ | - | Normal coating | 26.67% | 0.64 |
| Comparative Example 2 | $LiNi_{0.5}Mn_{0.3}Co_{0.2}O_2$ | - | Normal coating | 87.65% | 2.75 |

In Table 1, it can be learned from the comparison between Examples 1 to 19 and Comparative Examples 1 and 2 that, under the same preparation condition, the secondary battery containing the electrode plate of this embodiment of this application has at least one aspect of the first-cycle coulombic efficiency, the DC impedance, and the high- and low-temperature performance better than the secondary battery of the corresponding comparative example (even in a case in which a pressure of a compressing process is large, for example, Example 10), and presents a more significant effect under more severe charging/discharging conditions.

In Table 2, it can be learned from the comparison between Examples 1 to 19 and Comparative Examples 1 and 2 that, under the same preparation condition, the secondary battery containing an electrode plate of this embodiment of this application has both better charge rate performance and discharge rate performance than the secondary battery of the corresponding comparative example.

In Table 3, it can be learned from the comparison between Examples 1 to 19 and Comparative Examples 1 and 2 that, under the same preparation condition, the secondary battery containing the electrode plate of this embodiment of this application has higher infiltration rate of the electrolyte to the electrode plate than the secondary battery of the corresponding comparative example (approximately 4 times the secondary battery of the corresponding comparative example). Therefore, from the aspect of battery productivity, the infiltration rate of the electrolyte to the electrode plate is raised, which can shorten the time for the electrolyte infiltrating the cell and greatly improve the battery productivity.

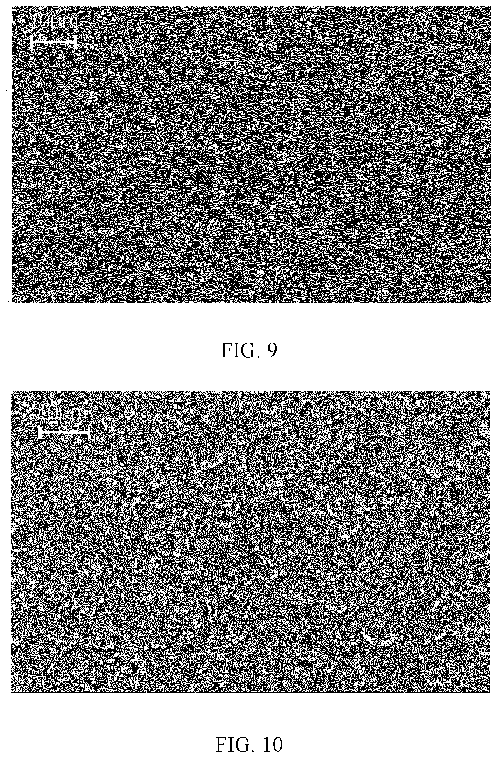

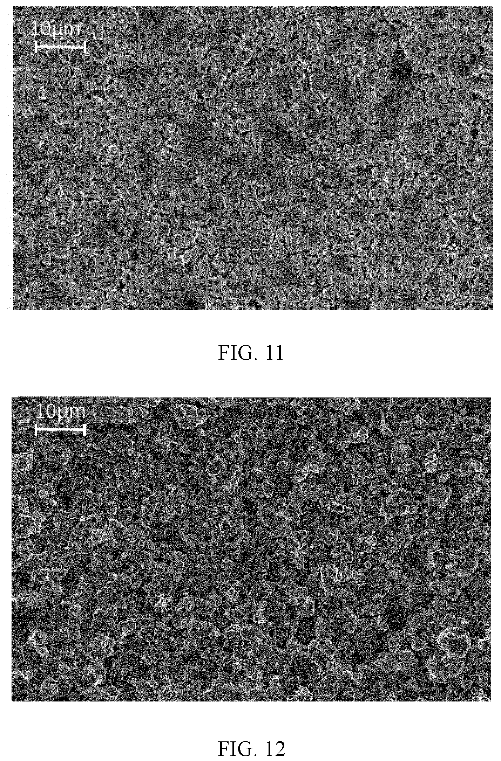

FIG. 9 to FIG. 12 are respectively SEM diagrams of outer surface sides of positive electrode plates in Comparative Example 1, Example 1, Comparative Example 2, and Example 2. It can be seen from the comparison between Examples 1 and 2 and Comparative Examples 1 and 2 that the porosities of the outer surface sides of Examples 1 and 2 are significantly greater than those of the outer surface sides of Comparative Examples 1 and 2.

It should be noted that this application is not limited to the foregoing examples. The foregoing embodiments are merely examples, and embodiments having constructions substantially the same as those of the technical idea and having the same effects as the technical idea within the scope of the technical solutions of this application are all included in the technical scope of this application. In addition, within the scope without departing from the essence of this application, various modifications that can be conceived by persons skilled in the art are applied to the embodiments, and other modes constructed by combining some of the constituent elements in the embodiments are also included in the scope of this application.

## Claims

1. An electrode plate, comprising a current collector and an electrode active material layer disposed on at least one surface of the current collector, wherein
   the electrode active material layer has a maximum porosity on an outer surface side thereof.

2. The electrode plate according to claim 1, wherein the electrode active material layer has a minimum porosity on a bottom surface side thereof that is opposite the outer surface side.

3. The electrode plate according to claim 1 or 2, wherein when the electrode plate is a positive electrode plate, a compacted density is 2.1 g/cm$^3$-3.8 g/cm$^3$; and when the electrode plate is a negative electrode plate, the compacted density is 1.3 g/cm$^3$-1.8 g/cm$^3$.

4. A preparation method of electrode plate, comprising the following steps:

   step (1): providing an electrode active material slurry, applying the electrode active material slurry on at least one surface of a polymer substrate, and performing drying to obtain an initial electrode plate that has an electrode active material layer; and
   step (2): providing a metal substrate, stacking the metal substrate and the initial electrode plate in such a way that a surface of the metal substrate faces the electrode active material layer, and performing a compressing process to transfer the electrode active material layer to the surface of the metal substrate.

5. The preparation method of electrode plate according to claim 4, wherein a pressure of the compressing process is 20 tons-80 tons.

6. The preparation method of electrode plate according to claim 4 or 5, wherein the compressing process is rolling.

7. The preparation method of the electrode plate according to any one of claims 4 to 6, wherein the polymer substrate is selected from at least one of polyethylene terephthalate (PET) film, polypropylene (PP) film, polyethylene (PE) film, polyvinyl alcohol (PVA) film, polyvinylidene fluoride (PVDF) film, polytetrafluoroethylene (PTFE) film, polycarbonate (PC) film, polyvinyl chloride (PVC) film, polymethyl methacrylate (PMMA) film, polyimide (PI) film, polystyrene (PS) film, and polybenzimidazole (PBI) film.

8. The preparation method of electrode plate according to any one of claims 4 to 7, wherein a thickness of the polymer substrate is 25 $\mu$m-500 $\mu$m.

9. The preparation method of electrode plate according to any one of claims 4 to 8, wherein the metal substrate is an aluminum foil or a copper foil.

10. A secondary battery, comprising the electrode plate according to any one of claims 1 to 3 or the electrode plate obtained by using the preparation method of electrode plate according to any one of claims 4 to 9.

11. A battery module, comprising the secondary battery according to claim 10.

12. A battery pack, comprising the battery module according to claim 11.

13. An electric apparatus, comprising at least one of the secondary battery according to claim 10, the battery module according to claim 11, or the battery pack according to claim 12.

**5**

FIG. 1

**5**

53

52

52

51

FIG. 2

FIG. 3

FIG. 4

FIG. 5

FIG. 6

FIG. 7

Outer surface side (less binder)
Outer surface side (enriched binder)

After compressing and transferring

FIG. 8

FIG. 9

FIG. 10

FIG. 11

FIG. 12

## INTERNATIONAL SEARCH REPORT

| International application No. |
|---|
| **PCT/CN2022/072475** |

| A. | CLASSIFICATION OF SUBJECT MATTER |
|---|---|

H01M 4/04(2006.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电极, 孔隙率, 最大, 最小, 梯度, 逐渐, 转印, 转移, 转录, 聚合物, 粘结, 黏结, 粘接, 黏接, electrode, porosity, maximum, minimum, gradient, gradual, transfer, polymer, binder

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110752345 A (HUIZHOU EVE ENERGY CO., LTD.) 04 February 2020 (2020-02-04) description, paragraphs 7-70, and figure 4 | 1-3, 10-13 |
| X | JPH 08250110 A (DAINIPPON PRINTING CO., LTD.) 27 September 1996 (1996-09-27) description, paragraphs 8-28, and figures 1-4 | 4-13, |
| X | CN 111244395 A (SUZHOU YILAI KEDE TECHNOLOGY CO., LTD.) 05 June 2020 (2020-06-05) description, paragraphs 4-19, and figures 1-2 | 1-3, 10-13 |
| A | CN 111293273 A (TSINGHUA UNIVERSITY) 16 June 2020 (2020-06-16) entire document | 1-13 |

| ☐ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 September 2022** | **10 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/072475**

| Patent document cited in search report | | | Publication date (day/month/year) | Patent family member(s) | | | Publication date (day/month/year) |
|---|---|---|---|---|---|---|---|
| CN | 110752345 | A | 04 February 2020 | None | | | |
| JPH | 08250110 | A | 27 September 1996 | None | | | |
| CN | 111244395 | A | 05 June 2020 | WO | 2021147410 | A1 | 29 July 2021 |
| CN | 111293273 | A | 16 June 2020 | CN | 111293273 | B | 06 November 2020 |

Form PCT/ISA/210 (patent family annex) (January 2015)

**EP 4 354 527 A1**